# EUROPEAN PATENT SPECIFICATION

(11) **EP 0 481 482 B1**
(45) Date of publication and mention of the grant of the patent: **22.07.1998**
(21) Application number: 91117742.6
(22) Date of filing: 17.10.1991
(51) Int. Cl.: H04M 15/00, H04M 15/28, H04M 17/00

(54) **Auxiliary unit for home telephone allowing use of prepaid cards**
Mit Wertkarten zu benutzende Zusatzeinheit für Hausfernsprechgerät
Unité auxiliaire pour téléphone domestique permettant l'utilisation de cartes prépayées

(30) Priority: 19.10.1990 JP 282214/90
(43) Date of publication of application: 22.04.1992
(73) Proprietor: NEC CORPORATION, Tokyo (JP)
(72) Inventor: Kobayashi, Hideharu, Minato-ku, Tokyo (JP); Okuda, Jiro, Minato-ku, Tokyo (JP)
(74) Representative: VOSSIUS & PARTNER

(56) References cited:
- EP-A- 0 185 365
- EP-A- 0 378 727
- GB-A- 2 211 050
- PATENT ABSTRACTS OF JAPAN vol. 013, no. 481 (E-838)31 October 1989 & JP-A-11 089 276 (TOKIN CORP.) 28 July 1989
- PATENT ABSTRACTS OF JAPAN vol. 014, no. 130 (E-0901)12 March 1990 & JP-A-13 020 851 (NEC HOME ELECTRON LTD) 26 December 1989
- REVIEW OF THE ELECTRICAL COMMUNICATIONS LABORATORIES vol. 35, no. 6 , November 1987 , TOKYO, JAPAN pages 671 - 679 M.KAIHARA ET AL. 'New Card/Coin Telephones'

## Description

The present invention relates to a system for adjusting remaining values still available with prepaid cards (telephone cards) by use of a subscriber telephone system.

Charging systems conventionally practiced with a subscriber telephone situated at home and a public telephone are as follows. Charge processing associated with a subscriber telephone is entirely assigned to an exchange. Namely, when a conversation on the subscriber telephone ends, the exchange calculates a charge on the basis of the duration of the conversation and the distance and then collectively accumulates it in a particular area of a storage which is assigned to the subscriber as a telephone account. On the other hand, a charging system for a public telephone collects, for example, a coin or coins on the telephone by causing an exchange to send a charge signal to the telephone at each particular timing while a conversation is under way. Regarding a desk-top type public telephone, the management of the safe is deputed to a trustee, so that the exchange has to grasp the sum collected in the safe. For this purpose, every time a charge is collected, the public telephone sends to the exchange an end-of-collection signal indicating the use of a coin or the use of a telephone card.

Briefly, a small-size public telephone operable with both of telephone cards and coins is operated as follows.
(a) As a person off-hooks the telephone and then inserts a telephone card, the remaining value still available with the telephone card is displayed and a call is originated.
(b) The telephone collects the charge by giving priority to a telephone card, then to a coin of lower denomination, and then to a coin of higher denomination.
(c) As a conversation proceeds, the deposited value is sequentially subtracted and, about 10 seconds before the cut-off of the conversation, an alert tone is sent to the receiver of the telephone for more deposit for more conversation.
(d) After the end of the conversation, the telephone card is punched in a particular position thereof to indicate the approximate value remaining and then returned.

Thus, a telephone charging system capable of adjusting the remaining values of telephone cards has not been available. On the other hand, since telephone cards are extensively used with a public telephone system, it is likely that a person having a number of telephone cards discards them despite that some values are still available with the cards.

A pay phone system has been described in EP-A1- 0 185 365.

In this system, a pay phone apparatus communicates with the central computer through telephone lines and further via a telephone central exchange.

The pay phone apparatus is operated by means of a magnetic card.

Each card includes information or data readable from the card and identifying the card and further representing an amount corresponding to an allowable telephone call duration.

The pay phone system is operated in the following manner:

The card is received in a card-receiving slot in the apparatus and the data of the card are read from the card and stored in a first storage means of the pay phone apparatus. The first storage means of the pay phone apparatus is addressable from the remote central computer for transferring data stored in the first storage means to the remote central computer. In a second storage means of the pay phone apparatus, data transferred from the remote central computer are stored. In a comparator means of the pay phone apparatus, the data read from the card and stored in the first storage means are compared to the data stored in the second storage means. By the comparison, the card is identified as a legal card or as an illegal card identified by the data of the second storage means. In case the card is identified as an illegal card, the card is rejected from the pay phone apparatus. In case the card is identified as a legal card, a telephone call is permitted. In a debiting means, an amount corresponding to the duration of the telephone call is determined and in a subtraction means of the pay phone apparatus, the amount is subtracted from the data stored in the first storage means representing the amount corresponding to an allowable telephone call duration, and a reduced amount is generated and stored in the first storage means. When the amount determined by the debiting means exceeds the amount corresponding to the allowable telephone call duration, the telephone call is interrupted. At the end of the telephone call, the data stored in the first storage means are written in the card by means of a writing means of the pay phone apparatus and identify the card and further represent the reduced amount corresponding to an allowable telephone call duration.

Periodically, the remote central computer addresses the first storage means of the individual pay phone apparatuses and transfers the data stored therein to the remote central computer for processing therein. On the basis of the data transferred from the first storage means of the individual pay phone apparatuses, the remote central computer updates the data of the second storage means of the individual pay phone apparatus.

EP-A1-0 378 727 describes a device for converting private-user telephones into telephones enabled by obliterable pre-payment cards.

It is, therefore an object of the present invention to provide a charging system which allows a subscriber to have superfluous telephone cards each having a remaining value to be effectively adjusted with a telephone account of a conventional subscriber home telephone.

It is another object of the present invention to provide a generally improved charging system for a subscriber telephone system.

These objects are solved with a charging system for a subscriber telephone system according to claim 1.

The above and other objects, features and advantages of the present invention will become more apparent from the following detailed description taken with the accompanying drawings in which:
FIG. 1 is a block diagram schematically showing a charging system embodying the present invention;
FIG. 2 is a block diagram schematically showing a specific construction of an exchange included in the embodiment;
FIG. 3 is a block diagram schematically showing a specific construction of an auxiliary unit also included in the embodiment; and
FIG. 4 is a block diagram schematically showing a charging system associated with a conventional public telephone.

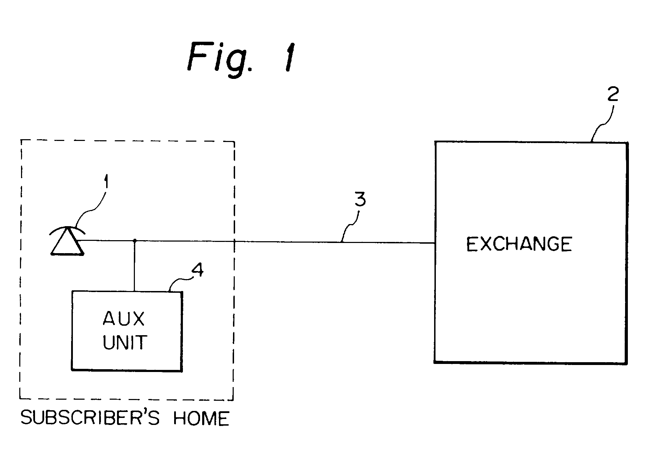

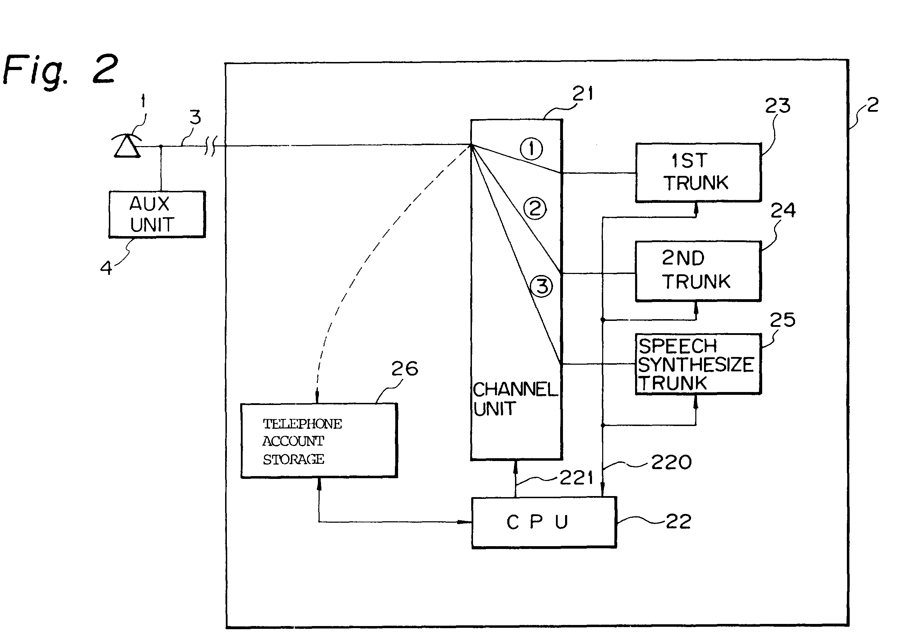

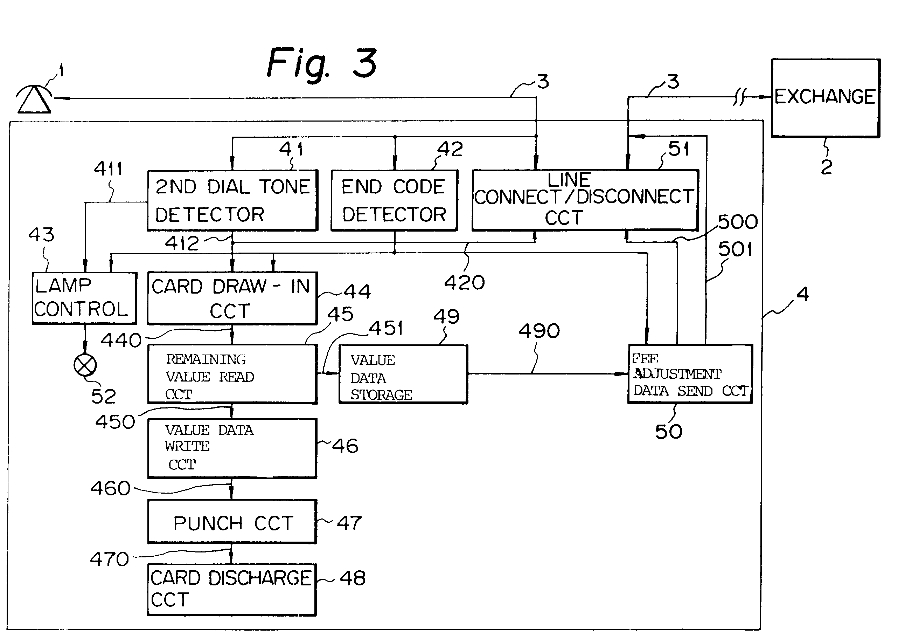

Referring to FIGS. 1-3, a charging system for a subscriber telephone system embodying the present invention is shown. As shown, the system has a telephone implemented as a push-button telephone 1 and situated at the subscriber's home. The telephone 1 is connected to an exchange 2 by a subscriber line 3. An auxiliary unit 4 is also situated at the subscriber's home and connected to the subscriber line 3.

When a call is originated on the push-button telephone 1, a CPU 22 incorporated in the exchange 2 drives a channel unit 21 to connect the subscriber line 3 to a first trunk 23. As a result, a first dial tone is returned to the telephone 1. Here, assume that a subscriber line connecting/disconnecting circuit 51 built in the auxiliary unit 4 maintains the subscriber line 3 being connected to the exchange 2 at the beginning. As an access dial number such as "160" predetermined by the system is entered on the telephone 1, it is received by the first trunk 23. The CPU 22 reads the dial number via a data bus 220 and then connects the subscriber line 3 to a second trunk 24. In response, the second trunk 24 sends a second dial tone to the subscriber line 3 over a predetermined period of time.

A second dial tone detector 41 is included in the auxiliary unit 4. As the second dial tone detector 41 detects the second dial tone from the exchange 2, it starts a lamp flash control circuit 43 over a control line 411 to thereby cause a lamp 52 to flash. The lamp 52 shows the user of the telephone 1 that the auxiliary unit 4 is ready to receive a telephone card therein. At the same time, the second dial tone detector 41 starts the subscriber line connecting/disconnecting circuit 51 and a card draw-in circuit 44 over a control line 412. In response, the connecting/disconnecting circuit 51 disconnects the subscriber line 3 from the exchange 2 and a loop termination is provided at each of the telephone 1 and the exchange 2. This prevents a PB (Push-Button) signal of the telephone from being transmitted to the exchange 2. The card draw-in circuit 44 energizes a motor, not shown, (step 1) and, after drawing a telephone card in the auxiliary unit 4, starts a remaining value reading circuit 45 over a control line 440 (step 2). After reading the remaining value still available with the telephone card, the reading circuit 45 sends the read data to a value data storage 49 over a data line 451 and, at the same time, starts a value data writing circuit 46 (step 3). The value data storage 49 sequentially accumulates the received value data which are still available (step 4). The value data writing circuit 46 rewrites the value data of the telephone card to zero while driving a punching circuit 47 over a control line 460 (step 5). The punching circuit 47 punches the telephone card in a particular position of the latter indicative of a zero value and commands a card discharging circuit 48 to drive the telephone card out of the auxiliary unit 4 over a control line 470 (step 6). In response, the card discharging circuit 48 discharges the telephone card from the auxiliary unit 4 (step 7). Every time a telephone card is inserted into the auxiliary unit 4, the above-described steps 2-7 are repeated.

Thereafter, the user operates the telephone 1 to send a predetermined end code such as a code "#", an end code detector 42 detects it, and instructs to stop the operation of the card draw-in circuit 44 and the lamp control circuit 43, and a message rate sending circuit 50 over a control line 420. As a result, the card draw-in circuit 44 deenergizes the motor for pulling in a telephone card while the lamp control circuit 43 turns off the lamp 52 to inhibit the insertion of a telephone card. At the same time, the fee adjustment data sending circuit 50 reads the accumulated values out of the storage 49 over a data line 490 and then converts it to a decimal number. Assuming that the decimal number is "50" by way of example, the circuit 50 divides it into numerals "5" and "0" and sequentially sends them to the exchange 2 over a data line 501 as a PB signal. At the same time, the circuit 50 starts the connecting/disconnecting circuit 51 over a control line 500. In response, the connecting/disconnecting circuit 51 connects the subscriber line 3 at each of the telephone 1 side and exchange 2 side, setting up a through state again.

The accumulated values as the fee adjustment data in the form of a PB signal is received by the second trunk 24 of the exchange 2. The CPU 22 reads the received fee adjustment data over a data line 220. The CPU 22 has a storage 26 in which measured telephone account each being associated with respective one of subscriber lines is stored. The CPU 22 subtracts the received fee adjustment data from the telephone account read out of the storage 26 and then stores the result of subtraction in the storage 26. At the same time, the CPU 22 drives the channel unit 21 to connect the subscriber line 3 to a speech synthesizing trunk 25. Subsequently, the CPU 22 sends the data read out of the second trunk 24 to the speech synthesizing trunk 25 over the data line 220 and then drives the trunk 25 to inform the subscriber of the adjusted fee amount by voice.

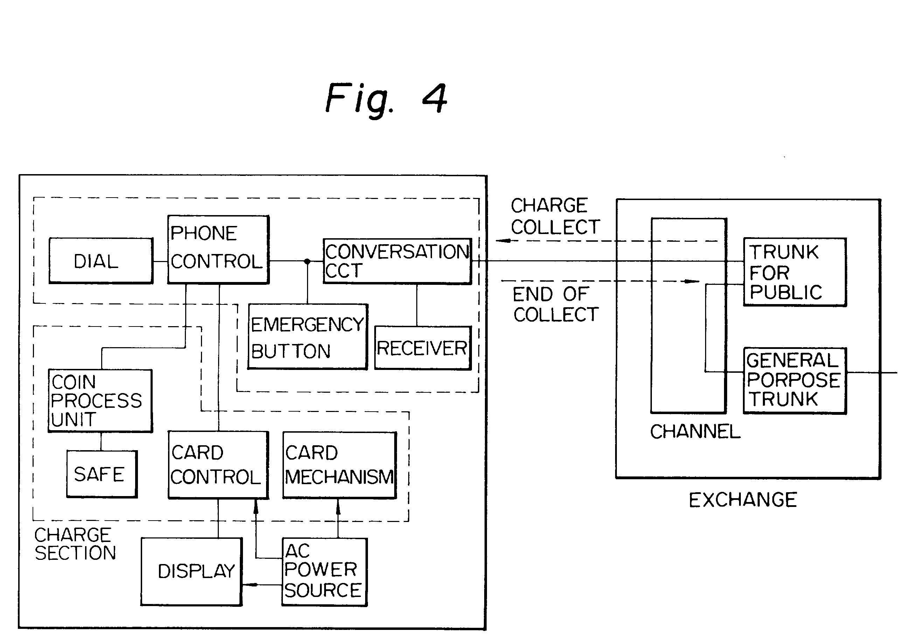

FIG. 4 shows a charging system particular to a conventional public telephone having been described at the introductory part of the specification.

In summary, it will be seen that the present invention provides a useful and economical charging system which allows the remaining value in superfluous telephone cards to be adjusted with a telephone account of a subscriber telephone. This is achievable only if a simple auxiliary unit which can be installed in each home is connected to a subscriber line and if an exchange is provided with corresponding functions.

## Claims

1. A charging system for a subscriber telephone system which accommodates push-button telephones (1), comprising:
an exchange (2) for executing charge processing; and
an auxiliary unit (4) added to a subscriber line (3) for executing a fee adjustment request command;
said exchange (2) comprising:
call origination detecting means (22) for detecting a call origination on said push-button telephone (1);
first dial tone sending means (23) for sending a first dial tone to said subscriber line when said call origination detecting means detects the origination of a call;
dial number receiving and analyzing means (22) for receiving a dial number which is sent from said telephone (1) in response to said first dial tone, and analyzing said received dial number with respect to a plurality of services;
second dial tone sending means (24) for sending a second dial tone to said subscriber line when a predetermined dial number is received as determined by said dial number receiving and analyzing means;
fee adjustment data receiving means (22) for receiving fee adjustment data from said subscriber line (3);
telephone account recording means (26) associated with said subscriber line for recording the telephone account particular to said subscriber;
subtracting and recording means (22) for subtracting said fee adjustment data from said telephone account recorded in said telephone account recording means, and then recording the result of subtraction in said telephone account recording means (26); and
speech synthesizing and sending means (25) for sending a synthetic speech representative of said fee adjustment data received from said fee adjustment data receiving means to said subscriber line (3),
said auxiliary unit (4) comprising:
second dial tone detecting means (41) wired-ORed to said subscriber line (3) for detecting said second dial tone;
end code detecting means (42) wired-ORed to said subscriber line (3) for detecting a predetermined end code sent from said telephone (1) and representative of the end of a service request;
lamp controlling means (43) for causing, when said second dial tone detecting means detects said second dial tone, a lamp (52) to flash to thereby show that a telephone card may be inserted into said auxiliary unit (4) and turning off said lamp when said end code detecting means (42) detects said end code;
card drawing means (44) for drawing, every time a telephone card is inserted into said auxiliary unit (4) said telephone card in said auxiliary unit (4) during an interval between the detection of said second dial tone and the detection of said end code;
remaining value reading means (45) for reading, when said telephone card is drawn in, the remaining value stored in said telephone card;
value data writing means (46) for writing, after said remaining value reading means has read said value remaining in said telephone card, zero in said telephone card as a remaining value available with said telephone card;
punching means (47) for punching, after said value data writing means (46) has written zero in said telephone card, said telephone card in a position of a remaining value indicating section which is representative of zero;
card discharging means (48) for driving said telephone card out of said auxiliary unit (4) after said punching means (47) has punched said telephone card at said position;
value data storing means (49) for sequentially accumulating and storing value data having been read by said remaining value reading means (45);
fee adjustment data sending means (50) wired-ORed to said subscriber line (3) in a position closer to said exchange (2) than said second dial tone detecting means (41) and said end code detecting means (42) for sending, when said end code detecting means (42) detects said end code, said accumulated value as fee adjustment data to said exchange (2); and
subscriber line connecting/disconnecting means (51) disposed on said subscriber line between said telephone (1) and said exchange (2) for connecting said telephone to said exchange until said second dial tone has been detected, for disconnecting said telephone from said exchange until completion of operation of said auxiliary unit (4) by sending said fee adjustment data to said exchange (2) from said fee adjustment data sending means (50), and for reconnecting said telephone (1) to said exchange (2) when said synthetic speech is being sent from said exchange (2), wherein loop termination is provided to each of said telephone (1) and said exchange (2) while in disconnection.

## Patentansprüche

1. Gebührenberechnungssystem für ein Teilnehmer-Fernsprechsystem, das Tastwahltelefone (1) versorgt, mit:
einer Fernsprechvermittlung (2) zum Ausführen der Gebührenbearbeitung; und
einer einer Teilnehmerleitung (3) hinzugefügten Zusatzeinheit (4) zum Ausführen eines Gebührenanpassungsanfragebefehls;
wobei die Fernsprechvermittlung (2) aufweist:
eine Anruftätigungsnachweiseinrichtung (22) zum Nachweisen einer Anruftätigung auf dem Tastwahltelefon (1);
eine erste Wähltonsendeeinrichtung (23) zum Senden eines ersten Wähltons an die Teilnehmerleitung, wenn die Anruftätigungsnachweiseinrichtung die Tätigung eines Anrufs nachweist;
eine Rufnummerempfangs- und Rufnummeranalysiereinrichtung (22) zum Empfangen einer Rufnummer, die von dem Fernsprechgerät (1) als Antwort auf den ersten Wählton gesendet wird, und zum Analysieren der empfangenen Rufnummer bezüglich mehrerer Anschlüsse;
eine zweite Wähltonsendeeinrichtung (24) zum Senden eines zweiten Wähltons an die Teilnehmerleitung, wenn eine bestimmte Rufnummer empfangen wird, wie sie von der Rufnummerempfangs- und Rufnummeranalysiereinrichtung bestimmt worden ist;
eine Gebührenanpassungsdatenempfangseinrichtung (22) zum Empfangen der Gebührenanpassungsdaten von der Teilnehmerleitung (3);
eine mit der Teilnehmerleitung verknüpfte Fernsprechkontoaufzeichnungseinrichtung (26) zum Aufzeichnen des teilnehmereigenen Fernsprechkontos;
eine Subtraktions- und Aufzeichnungseinrichtung (22) zum Subtrahieren der Gebührenanpassungsdaten von dem in der Fernsprechkontoaufzeichnungseinrichtung aufgezeichneten Fernsprechkonto und zum weiteren Aufzeichnen des Subtraktionsergebnisses in der Fernsprechkontoaufzeichnungseinrichtung (26); und
eine Spracherzeugungs- und Sprachsendeeinrichtung (25) zum Senden einer synthetischen Sprache, die für die von der Gebührenanpassungsdatenempfangseinrichtung empfangenen Gebührenanpassungsdaten repräsentativ ist, an die Teilnehmerleitung (3);
wobei die Zusatzeinheit (4) aufweist:
eine mit der Teilnehmerleitung (3) ODER-verdrahtete zweite Wähltonnachweiseinrichtung (41) zum Nachweisen des zweiten Wähltons;
eine mit der Teilnehmerleitung (3) ODER-verdrahtete Endcodenachweiseinrichtung (42) zum Nachweisen eines bestimmten Endcodes, der von dem Fernsprechgerät (1) gesendet wird und für das Ende einer Anschlußanfrage repräsentativ ist;
eine Lampensteuereinrichtung (43) zum Bewirken, daß eine Lampe (52) blinkt, wenn die zweite Wähltonnachweiseinrichtung den zweiten Wählton nachweist, um dadurch zu zeigen, daß eine Wertkarte in die Zusatzeinheit (4) eingeführt werden kann, und zum Ausschalten der Lampe, wenn die Endcodenachweiseinrichtung (42) den Endcode nachweist;
eine Karteneinzugseinrichtung (44), um jedesmal, wenn eine Wertkarte in die Zusatzeinheit (4) eingeführt wird, die Wertkarte in die Zusatzeinheit (4) während eines Zeitraums zwischen dem Nachweis des zweiten Wähltons und dem Nachweis des Endcodes einzuziehen;
eine Restwertleseeinrichtung (45) zum Lesen des auf der Wertkarte gespeicherten Restwerts, wenn die Wertkarte eingezogen ist;
eine Wertdatenschreibeinrichtung (46) zum Schreiben von Null auf die Wertkarte als einen bei der Wertkarte verfügbaren Restwert, nachdem die Restwertleseeinrichtung den auf der Wertkarte verbleibenden Wert gelesen hat;
eine Lochungseinrichtung (47) zum Lochen der Wertkarte in einer Position eines Restwerts, der den Abschnitt anzeigt, der für Null repräsentativ ist, nachdem die Wertdatenschreibeinrichtung (46) Null auf die Wertkarte geschrieben hat;
eine Kartenausgabeeinrichtung (48) zum Ausgeben der Wertkarte aus der Zusatzeinheit (4), nachdem die Lochungseinrichtung (47) die Wertkarte an der Position gelocht hat;
eine Wertdatenspeichereinrichtung (49) zum fortlaufenden Ansammeln und Speichern der von der Restwertleseeinrichtung (45) gelesenen Wertdaten;
eine Gebührenanpassungsdatensendeeinrichtung (50), die mit der Teilnehmerleitung (3) in einer Position ODER-verdrahtet ist, die näher an der Fernsprechvermittlung (2) liegt als die zweite Wähltonnachweiseinrichtung (41) und die Endcodenachweiseinrichtung (42), zum Senden des gespeicherten Werts als Gebührenanpassungsdaten an die Fernsprechvermittlung (2), wenn die Endcodenachweiseinrichtung (42) den Endcode nachweist; und
eine auf der Teilnehmerleitung zwischen dem Fernsprechgerät (1) und der Fernsprechvermittlung (2) angeordnete Teilnehmerleitungsverbindungs-Trennungseinrichtung (51) zum Verbinden des Fernsprechgeräts mit der Fernsprechvermittlung, bis der zweite Wählton nachgewiesen worden ist, zum Trennen des Fernsprechgeräts von der Fernsprechvermittlung bis zur Beendigung des Betriebs der Zusatzeinheit (4), indem die Gebührenanpassungsdaten von der Gebührenanpassungsdatensendeeinrichtung (50) an die Fernsprechvermittlung (2) gesendet werden, und zum Wiederverbinden des Fernsprechgeräts (1) mit der Fernsprechvermittlung (2), wenn von der Fernsprechvermittlung (2) die synthetische Sprache gesendet wird, wobei während der Trennung die Beendigung der Leitungsschleife sowohl an dem Fernsprechgerät (1) als auch der Fernsprechvermittlung (2) geliefert wird.

## Revendications

1. Système de taxation pour système téléphonique d'abonnés qui contient des téléphones à boutons-poussoirs (1), comprenant :
un central (2) pour exécuter un traitement de taxation ; et,
une unité auxiliaire (4) ajoutée à une ligne d'abonné (3) pour exécuter une commande de demande d'ajustement de prix ;
ledit central (2) comprenant :
un moyen de détection d'émission d'appel (22) pour détecter une émission d'appel sur ledit téléphone à boutons-poussoirs (1) ;
un premier moyen d'envoi de tonalité de manoeuvre (23) pour envoyer une première tonalité de manoeuvre sur ladite ligne d'abonné quand ledit moyen de détection d'émission d'appel détecte l'émission d'un appel :
un moyen de réception et d'analyse de numéro d'appel (22) pour recevoir un numéro d'appel qui est envoyé par ledit téléphone (1) en réponse à ladite première tonalité de manoeuvre, et analyser ledit numéro d'appel reçu par rapport à une pluralité de services ;
un second moyen d'envoi de tonalité de manoeuvre (24) pour envoyer une seconde tonalité de manoeuvre sur ladite ligne d'abonné quand un numéro d'appel prédéterminé est reçu tel que déterminé par ledit moyen de réception et d'analyse de numéro d'appel ;
un moyen de réception de données d'ajustement de prix (22) pour recevoir des données d'ajustement de prix de ladite ligne d'abonné (3) ;
un moyen d'enregistrement de compte téléphonique (26) associé à ladite ligne d'abonné pour enregistrer le compte téléphonique propre audit abonné ;
un moyen de soustraction et d'enregistrement (22) pour retrancher lesdites données d'ajustement de prix dudit compte téléphonique enregistré dans ledit moyen d'enregistrement de compte téléphonique, et enregistrer ensuite le résultat de la soustraction dans ledit moyen d'enregistrement de compte téléphonique (26) ; et,
un moyen de synthèse et d'envoi de parole (25) pour envoyer une parole de synthèse, représentative desdites données d'ajustement de prix reçues dudit moyen de réception de données d'ajustement de prix, sur ladite ligne d'abonné (3),
ladite unité auxiliaire (4) comprenant :
un second moyen de détection de tonalité de manoeuvre (41) connecté par câblage OU à ladite ligne d'abonné (3) pour détecter ladite seconde tonalité de manoeuvre ;
un moyen de détection de code de fin (42) connecté par câblage OU à ladite ligne d'abonné (3) pour détecter un code de fin prédéterminé envoyé par ledit téléphone (1) et représentatif de la fin d'une demande de service ;
un moyen de commande de voyant (43) pour faire en sorte que, lorsque ledit second moyen de détection de tonalité de manoeuvre détecte ladite seconde tonalité de manoeuvre, un voyant (52) clignote pour indiquer ainsi qu'une carte de téléphone peut être insérée dans ladite unité auxiliaire (4), et éteindre ledit voyant quand ledit moyen de détection de code de fin (42) détecte ledit code de fin ;
un moyen d'introduction de carte (44) pour introduire, chaque fois qu'une carte de téléphone est insérée dans ladite unité auxiliaire (4), ladite carte de téléphone dans ladite unité auxiliaire (4) pendant un intervalle entre la détection de ladite seconde tonalité de manoeuvre et la détection dudit code de fin ;
un moyen de lecture de valeur restante (45) pour lire la valeur restante stockée sur ladite carte de téléphone quand ladite carte de téléphone est introduite ;
un moyen d'écriture de données de valeur (46) pour écrire zéro sur ladite carte de téléphone comme valeur restante disponible avec ladite carte de téléphone, après que ledit moyen de lecture de valeur restante a lu ladite valeur restant sur ladite carte de téléphone ;
un moyen de perforation (47) pour perforer ladite carte de téléphone en une position d'une partie indicative de valeur restante qui est représentative de zéro, après que ledit moyen d'écriture de données de valeur (46) a écrit zéro sur ladite carte de téléphone ;
un moyen de sortie de carte (48) pour entraîner ladite carte de téléphone hors de ladite unité auxiliaire (4) après que ledit moyen de perforation (47) a perforé ladite carte de téléphone à ladite position ;
un moyen de stockage de données de valeur (49) pour accumuler et stocker séquentiellement des données de valeur ayant été lues par ledit moyen de lecture de valeur restante (45) ;
un moyen d'envoi de données d'ajustement de prix (50) connecté par câblage OU à ladite ligne d'abonné (3) en une position plus proche dudit central (2) que ledit second moyen de détection de tonalité de manoeuvre (41) et ledit moyen de détection de code de fin (42) pour envoyer ladite valeur accumulée comme données d'ajustement de prix audit central (2), quand ledit moyen de détection de code de fin (42) détecte ledit code de fin ; et,
un moyen de connexion/déconnexion de ligne d'abonné (51) disposé sur ladite ligne d'abonné entre ledit téléphone (1) et ledit central (2) pour connecter ledit téléphone audit central jusqu'à ce que ladite seconde tonalité de manoeuvre ait été détectée, pour déconnecter ledit téléphone dudit central jusqu'à la fin du fonctionnement de ladite unité auxiliaire (4) par l'envoi desdites données d'ajustement de prix audit central (2) par ledit moyen d'envoi de données d'ajustement de prix (50), et pour reconnecter ledit téléphone (1) audit central (2) quand ladite parole de synthèse est émise par ledit central (2), une terminaison de boucle étant prévue pour ledit téléphone (1) et pour ledit central (2) pendant leur déconnexion.
